# EUROPEAN PATENT APPLICATION

(11) **EP 2 993 160 A1**
(43) Date of publication of application: **09.03.2016**
(21) Application number: 14892229.7
(22) Date of filing: 12.09.2014
(51) Int. Cl.: C02F 1/60, B01D 61/04, C02F 1/42, C02F 1/46, C02F 5/00

(54) **WATER TREATMENT DEVICE AND WATER TREATMENT METHOD**

(30) Priority: 26.05.2014 JP 2014108625
(71) Applicant: Mitsubishi Heavy Industries, Ltd., Tokyo 108-8215 (JP)
(72) Inventor: UKAI, Nobuyuki, Tokyo 108-8215 (JP); OKINO, Susumu, Tokyo 108-8215 (JP); SUZUKI, Hideo, Tokyo 108-8215 (JP); NAKASHOJI, Hiroshi, Tokyo 108-8215 (JP); YOSHIOKA, Shigeru, Tokyo 108-8215 (JP); KOMATSU, Tomomi, Tokyo 108-8215 (JP)
(74) Representative: Henkel, Breuer & Partner
(86) International application number: PCT/JP2014/074322
(87) International publication number: WO 2015/181999

(57) **Abstract**

The present invention is to provide a water treatment device and a water treatment method that can efficiently remove soluble silica in water to be treated. A water treatment device 1 of the present invention comprises: a soluble silica deposition section 13 that deposits soluble silica dissolved in water to be treated W1, the water to be treated W1 having a concentration of aluminate ion represented by general formula (1) below and a pH that are in predetermined ranges; a solid-liquid separating section 14 that separates the deposited soluble silica from the water to be treated W1 to obtain water to be treated W1 in which the soluble silica has been removed from the water to be treated W1; and a reverse osmosis membrane filtration section 30 that filtrates, by using a reverse osmosis membrane 30a, the water to be treated W1 in which the soluble silica has been removed in the solid-liquid separating section 14.

[Al(OH)₄]⁻ Formula (1)

## Description

### TECHNICAL FIELD

The present invention relates to a water treatment device and a water treatment method, and particularly relates to a water treatment device and a water treatment method that can efficiently remove soluble silica in water to be treated.

### BACKGROUND ART

Conventionally, wastewater treatment methods that remove soluble silica from wastewater that is discharged from chemical mechanical polishing (CMP) process in a production step for semiconductor devices have been proposed (e.g. see Patent Document 1). In the wastewater treatment method, wastewater containing soluble silica is treated with a coagulant to coagulate the soluble silica, and then the coagulated soluble silica is removed by a microfiltration membrane. Thereafter, by periodically flushing the microfiltration membrane, soluble silica in the water to be treated is removed as solids from the membrane surface of the microfiltration membrane.

### CITATION LIST

### Patent Literature

Patent Document 1: US Patent No. 5904853

### SUMMARY OF INVENTION

### Technical Problem

However, since the soluble silica is coagulated to remove by adding a coagulant in the water treatment method described in Patent Document 1, the soluble silica concentration cannot be always reduced sufficiently. Furthermore, although Patent Document 1 also investigated in a method of removing soluble silica by adding sodium aluminate or the like, use of an aluminum compound may negatively affect a purifying apparatus such as reverse osmosis membrane apparatus that is provided as a later step since the aluminum concentration in the wastewater is increased.

The present invention has been completed in the light of such circumstances, and an object of the present invention is to provide a water treatment device and a water treatment method that can efficiently remove soluble silica in water to be treated.

### Solution to Problem

A water treatment device of the present invention comprises: a soluble silica deposition section that deposits soluble silica dissolved in water to be treated, the water to be treated having a concentration of aluminate ion represented by general formula (1) below and a pH that are in predetermined ranges; a solid-liquid separating section that separates the deposited soluble silica from the water to be treated to obtain water to be treated in which the soluble silica has been removed from the water to be treated; and a reverse osmosis membrane filtration section that filtrates, by using a reverse osmosis membrane, the water to be treated in which the soluble silica has been removed in the solid-liquid separating section.

[Al(OH)₄]⁻ Formula (1)

According to this water treatment device, soluble silica in the water to be treated can be more efficiently removed compared to the case where the soluble silica is removed using a flocculant to flocculate the soluble silica since a compound, which is formed as a result of a reaction between aluminate ion and the soluble silica present in the water to be treated having a pH within the predetermined range, is deposited in the water to be treated. Therefore, the water treatment device that can efficiently remove soluble silica in water to be treated and that can reduce the effects of aluminum ions on the reverse osmosis membrane filtration apparatus can be achieved.

The water treatment device of the present invention preferably further comprises an aluminate ion adding section by which an aluminate ion additive is added to the water to be treated.

In the water treatment device of the present invention, the aluminate ion additive is preferably sodium aluminate.

The water treatment device of the present invention preferably further comprises a pH adjusting agent adding section by which the pH of the water to be treated is adjusted to a pH of 5.5 or higher by adding a pH adjusting agent to the water to be treated.

The water treatment device of the present invention preferably further comprises a seed material adding section by which soluble silica that is deposited in advance and that is contained in the water to be treated is added, as a seed material, to the water to be treated.

The water treatment device of the present invention preferably further comprises a magnesium ion adding section by which a magnesium ion additive is added to the water to be treated.

The water treatment device of the present invention preferably further comprises an electrolysis apparatus by which aluminate ion-containing water generated by electrolyzing a part of the water to be treated is added, as the aluminate ion additive, to the water to be treated.

The water treatment device of the present invention preferably further comprises an aluminum ion treating section by which aluminum ion contained in the treated water to be supplied to the reverse osmosis membrane filtration section is removed. By this configuration, since the soluble silica can be removed without using an aluminum-based flocculant, the aluminum concentration in the treated water can be reduced.

In the water treatment device of the present invention, the aluminum ion is preferably removed by an ion exchange resin provided in the aluminum ion treating section.

In the water treatment device of the present invention, the aluminum ion is preferably removed by adding a chelating agent to the water to be treated in the aluminum ion treating section.

The water treatment device of the present invention preferably further comprises: an aluminum ion concentration measurement device that measures an aluminum ion concentration of the water to be treated that is introduced to the reverse osmosis membrane filtration section; and a controlling device that controls at least one of: the aluminate ion concentration, pH of the water to be treated, an added amount of the chelating agent that is added to the aluminum ion treating section, and treatment of the ion exchange resin, based on the aluminum ion concentration that is measured by the aluminum ion concentration measurement device.

A water treatment method of the present invention comprises: a deposition step of depositing soluble silica dissolved in water to be treated, the water to be treated having a concentration of aluminate ion represented by general formula (1) below and a pH that are in predetermined ranges; a solid-liquid separating step of solid-liquid separating the deposited soluble silica from the water to be treated to obtain water to be treated in which the soluble silica has been removed from the water to be treated; and a filtration step of filtrating, by using a reverse osmosis membrane filtration section, the water to be treated in which the soluble silica has been removed by the solid-liquid separation.

[Al(OH)₄]⁻ Formula (1)

According to this water treatment method, soluble silica in water to be treated can be more efficiently removed compared to the case where the soluble silica is removed using a flocculant to flocculate the soluble silica since a compound, which is formed as a result of a reaction between aluminate ion and the soluble silica present in the water to be treated having a pH within the predetermined range, is deposited in the water to be treated. Therefore, the water treatment method that can efficiently remove soluble silica in water to be treated and that can reduce the effects of aluminum ions on the reverse osmosis membrane filtration apparatus can be achieved.

In the water treatment method of the present invention, an aluminate ion additive is preferably added to the water to be treated.

In the water treatment method of the present invention, the aluminate ion additive is preferably sodium aluminate.

In the water treatment method of the present invention, the pH of the water to be treated is preferably adjusted to a pH of 5.5 or higher by adding a pH adjusting agent to the water to be treated.

In the water treatment method of the present invention, soluble silica that is deposited in advance and that is contained in the water to be treated is preferably added, as a seed material, to the water to be treated.

In the water treatment method of the present invention, a magnesium ion additive is preferably added to the water to be treated.

In the water treatment method of the present invention, aluminate ion-containing water generated by electrolyzing a part of the water to be treated is preferably added, as the aluminate ion additive, to the water to be treated.

In the water treatment method of the present invention, the aluminum ion contained in the treated water to be supplied to the reverse osmosis membrane filtration section is preferably removed by an aluminum ion treating section. By this method, since the soluble silica can be removed without using an aluminum-based flocculant, the aluminum concentration in the treated water can be reduced.

The water treatment method of the present invention preferably further comprises: measuring an aluminum ion concentration in the water to be treated that is introduced to the purifying section of the water to be treated, and controlling at least one of: the aluminate ion concentration, pH of the water to be treated, an added amount of a chelating agent that is added to the aluminum ion treating section, and treatment of the ion exchange resin, based on the measured aluminum ion concentration.

### Advantageous Effects of Invention

According to the present invention, a water treatment device and a water treatment method that can efficiently remove soluble silica in water to be treated can be achieved.

### Brief Description of Drawings

FIG. 1 is a schematic diagram of a water treatment device according to the first embodiment of the present invention.
FIG. 2 is a diagram illustrating the relationship between the pH of water to be treated and the solubility of soluble silica to the water to be treated.
FIG. 3 is an explanatory diagram illustrating the solubility of soluble silica in the presence of aluminate ion.
FIG. 4A is a diagram illustrating the relationship between the pH of water to be treated after adding aluminum ion and the concentration of SiO₂.
FIG. 4B is a diagram illustrating the relationship between the pH of water to be treated after adding aluminum ion and the removal ratio of SiO₂.
FIG. 5 is a diagram illustrating the relationship between the addition ratio of aluminum (mol Al/mol SiO₂) and the removal ratio of SiO₂ in the water treatment device of the first embodiment.
FIG. 6A is a diagram illustrating the relationship for the SiO₂ concentration in water to be treated after adding magnesium ions.
FIG. 6B is a diagram illustrating the relationship for the removal ratio of SiO₂ in water to be treated after adding aluminum ions.
FIG. 7 is a schematic diagram of a water treatment device according to the second embodiment of the present invention.
FIG. 8 is a schematic diagram of a water treatment device according to the third embodiment of the present invention.
FIG. 9 is a schematic diagram of a soluble silica removing section of an embodiment of the present invention.
FIG. 10 is a schematic diagram of a water treatment device according to the first Application Example of the present invention.
FIG. 11 is a schematic diagram of a water treatment device according to the second Application Example of the present invention.
FIG. 12 is a schematic diagram of a water treatment device according to the third Application Example of the present invention.
FIG. 13 is a schematic diagram of a water treatment device according to the fourth Application Example of the present invention.
FIG. 14 is a diagram illustrating the results of the Working Example of the present invention and the Comparative Example.

### Description of Embodiments

In cooling water for cooling towers of plant facilities or the like, soluble silica (SiO₂) in cooling water may be condensed and deposited as a scale since a part of the cooling water is evaporated due to the heat exchange between the cooling water and exhaust gas at a high temperature exhausted from a boiler or the like. Because of this, the soluble silica contained in the cooling water needs to be deposited and removed periodically to maintain the soluble silica concentration at low.

An example of a method of removing soluble silica in water is a flocculation and precipitation process using an inexpensive aluminum-based flocculant (Al₂(SO₄)₃) and polyaluminum chloride ([Al₂(OH)nCl₆-n]m²)). Typically, in the flocculation and precipitation process, an aluminum-based flocculant is deposited as a positively charged aluminum hydroxide (Al(OH)₃: solid) and negatively charged colloids are flocculated on this aluminum hydroxide in the aqueous solution to precipitate. The aluminum hydroxide is weakly, negatively charged in water having a pH of 8 or higher, and is strongly, positively charged in water having a pH of 7 or lower. Because of this, the flocculation and precipitation using an aluminum-based flocculant is typically performed at a pH of 7 or lower, at which the aluminum hydroxide is positively charged, rather than at a pH of 8 or higher, at which the aluminum hydroxide is negatively charged.

The present inventors have focused on the fact that, in soluble silica-containing water to be treated having a pH within a predetermined range and an aluminate ion concentration within a predetermined range, a compound of aluminate ion and soluble silica is deposited in the water to be treated.

Therefore, the present inventors have found that soluble silica contained in the water to be treated can be removed more efficiently from the water to be treated than conventional methods by subjecting the compound of aluminate ion and the soluble silica to deposition in the water to be treated, and thus completed the present invention.

Hereinafter, embodiments of the present invention will be described in detail while referring to the attached drawings. Note that the present invention is not limited to the following embodiments and the present invention can be carried out by applying suitable modifications. Furthermore, embodiments described below can be suitably combined.

### First Embodiment

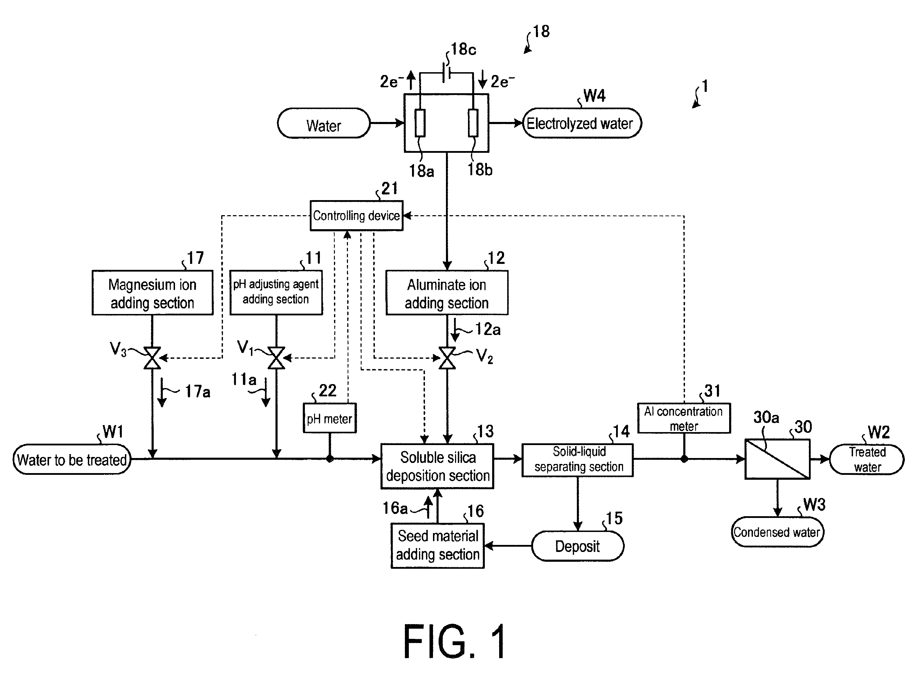

FIG. 1 is a schematic diagram of a water treatment device 1 according to the first embodiment of the present invention.

As illustrated in FIG. 1, the water treatment device 1 of this embodiment comprises: a pH adjusting agent adding section 11 by which a pH adjusting agent 11a is added to water to be treated W1 containing soluble silica to adjust the pH of the water to be treated W1 to be within a predetermined range; an aluminate ion adding section 12 by which an aluminate ion additive 12a represented by general formula (1) below is added to the water to be treated W1 to adjust the aluminate ion concentration in the water to be treated W1 to be within a predetermined range; a soluble silica deposition section 13 by which soluble silica is deposited from the water to be treated W1 having a predetermined range of pH and a predetermined range of aluminate ion concentration; a solid-liquid separating section 14 by which treated water W2 is obtained by solid-liquid separating the soluble silica that is deposited from the water to be treated W1 and the water to be treated W1; and a reverse osmosis membrane filtration section 30 that filtrates the water to be treated W1 in which the soluble silica has been removed in the solid-liquid separating section 14 to obtain treated water W2 and condensed water W3. The added amount of the pH adjusting agent 11a from the pH adjusting agent adding section 11 and the added amount of the aluminate ion additive 12a from the aluminate ion adding section 12 are controlled by a controlling device 21.

[Al(OH)₄]⁻ Formula (1)

Furthermore, the water treatment device 1 of this embodiment comprises a seed material adding section 16 that adds at least a part of deposit 15 separated in the solid-liquid separating section 14 as a seed material 16a to the soluble silica deposition section 13, and a magnesium ion adding section 17 that is provided at an upstream side of the pH adjusting agent adding section 11. Note that the seed material adding section 16 and the magnesium ion adding section 17 are not necessarily required as long as the soluble silica component in the water to be treated W1 can be deposited.

The water to be treated W1 is not particularly limited as long as the water to be treated W1 contains soluble silica, and examples of the water to be treated W1 include cooling water (blow-down water) of a cooling tower in a power plant or plant facilities and wastewater from semiconductor manufacturing facilities, boiler supply water, wastewater containing silica discharged from manufacturing facilities of supply water for boilers, well water, hot spring, condensed water or warm water of geothermal plant, industrial wastewater, wastewater from mining such as mine drainage and water associated with oil gas, sewage and treated water thereof, seawater, brine, surface water, and the like. The water to be treated preferably has a pH of 5.5 or higher from the perspective of efficiently depositing the soluble silica contained in the water to be treated.

The pH adjusting agent adding section 11 adds a pH adjusting agent 11a such as various acids and various bases to the water to be treated W1 to adjust the pH of the water to be treated to be within a predetermined range. Examples of the pH adjusting agent include various acids such as hydrochloric acid, sulfuric acid, and citric acid, and various bases such as sodium hydroxide and calcium hydroxide. The pH of the water to be treated W1 is not particularly limited as long as the pH is in a range that can deposit the soluble silica contained in the water to be treated W1.

The aluminate ion adding section 12 adds an aluminate ion additive represented by general formula (1) above to the water to be treated W1. By adding the aluminate ion additive to the water to be treated W1, the soluble silica contained in the water to be treated W1 can be efficiently removed since a compound of the aluminate ion additive and the soluble silica contained in the water to be treated W1 (e.g. Mg₅Al[AlSi₃O₁₀(OH)₂](OH)₆, NaAlO2·(SiO₂)₃, and the like) is deposited.

The aluminate ion additive is not particularly limited as long as the aluminate ion additive produces an aluminate ion in the water to be treated W1, and examples of the aluminate ion additive include various aluminates such as sodium aluminate (aluminum sodium tetrahydroxide), lithium aluminate, sodium aluminate, potassium aluminate, strontium aluminate, calcium aluminate, and magnesium aluminate; aluminate ion-containing water; and the like. Among these, sodium aluminate is preferable from the perspective of efficient removal of the soluble silica from the water to be treated W1.

The configuration of the soluble silica deposition section 13 is not particularly limited as long as the soluble silica deposition section 13 can deposit the soluble silica. For example, the soluble silica deposition section 13 may have a mixing vessel provided with a predetermined stirring device, or may have no mixing vessel. In the soluble silica deposition section 13 having a mixing vessel, the aluminate ion additive is added, as necessary, to the water to be treated having a pH adjusted to the predetermined range in the mixing vessel, and mixed by stirring to deposit the soluble silica. Because of this, the aluminate ion additive is rapidly and uniformly mixed, and thus the soluble silica is deposited in a reaction time of several seconds to several tens of seconds without flocculating the aluminate ion and silica. With regard to the stirring speed, the stirring may be performed at a slow speed or high speed. By stirring rapidly at a stirring speed of 100 rpm or higher, the volume of the mixing vessel may be set smaller. Furthermore, in the soluble silica deposition section 13 having no mixing vessel, the aluminate ion additive is mixed, as necessary, in a pipe by performing line injection/line mixing from a branch pipe provided in the pipe in which the water to be treated W1 flows. In this case, stirring efficiency can be enhanced by providing a component that disturbs the flow, such as a static mixer or elbow, in the pipe.

Note that, in this embodiment, "deposition of soluble silica" refers to the deposition of a compound of the soluble silica and aluminate ion, deposited as a solid, from the liquid. As the form of the deposition, the compound of the soluble silica and the aluminate ion may be deposited as amorphous, or the compound of the soluble silica and the aluminate ion may be deposited as crystal. Furthermore, the soluble silica deposition section 13 may use a flocculant to promote the solid-liquid separation of the soluble silica and the water to be treated W1. Examples of the flocculant include aluminum salts, iron salts, polymer flocculants, and the like.

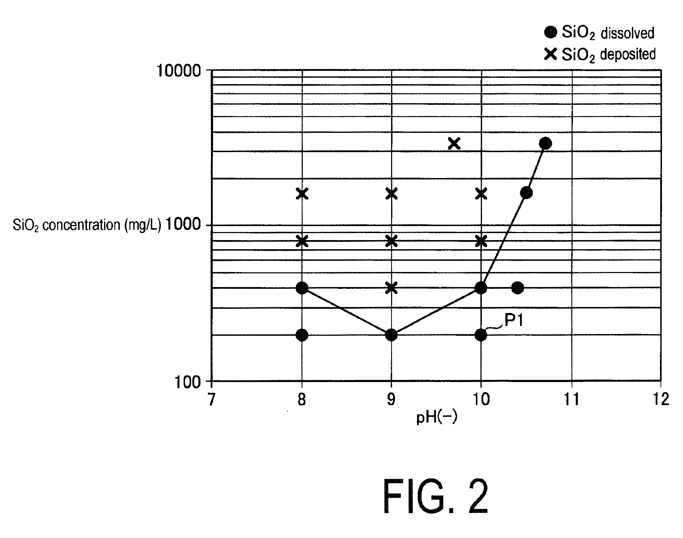

Now, the solubility of the soluble silica (SiO₂) in the water to be treated of the water treatment device 1 according to this embodiment will be described. FIG. 2 is a diagram illustrating the relationship between the pH of the water to be treated and the solubility of the soluble silica to the water to be treated. Note that FIG. 2 shows the observation results of SiO₂ deposition for the case where, after an aqueous solution containing soluble silica is diluted to have a predetermined SiO₂ concentration at 25°C under alkaline conditions, an acid is added to lower the pH. As shown in FIG. 2, for the water treatment device 1 according to this embodiment, the SiO₂ concentration at which the soluble silica deposits is minimum when the pH of the water to be treated is 9, and the SiO₂ concentration at which the soluble silica deposits tends to increase when the pH is lower than 9 or greater than 9.

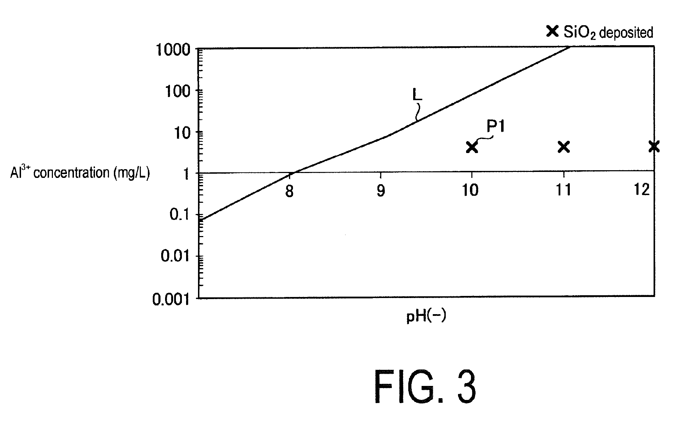

FIG. 3 is an explanatory diagram illustrating the solubility of the soluble silica in the presence of aluminate ion. Note that, in the example shown in FIG. 3, an example where pH was varied under a condition of 200 mg/L, which is the saturated solution of the soluble silica at pH 9 shown in FIG. 2, is shown. The straight line L in FIG. 3 describes the saturation solubility of sodium aluminate as an aluminate ion additive. As shown in FIG. 3, the solubility of the sodium aluminate (shown in logarithmic scale) is in a proportional relationship with the pH. As the pH increases, the solubility of the sodium aluminate also increases (see the straight line L in FIG. 3). In the presence of aluminate ions, the soluble silica is dissolved at pHs of 11 and 12 of the water to be treated W1; however, the soluble silica deposits as deposit in pH 10. That is, in the presence of aluminate ions, the soluble silica deposits as deposit even when the concentration of the soluble silica is equal to or less than that of the saturation solubility of the soluble silica shown in FIG. 2 (see point P1 of FIG. 2 and FIG. 3). It is thought that this result is caused by the deposition of a compound of the sodium aluminate and the soluble silica as deposit caused by the lowering of the solubility of the soluble silica due to the formation of the compound of the sodium aluminate and the soluble silica.

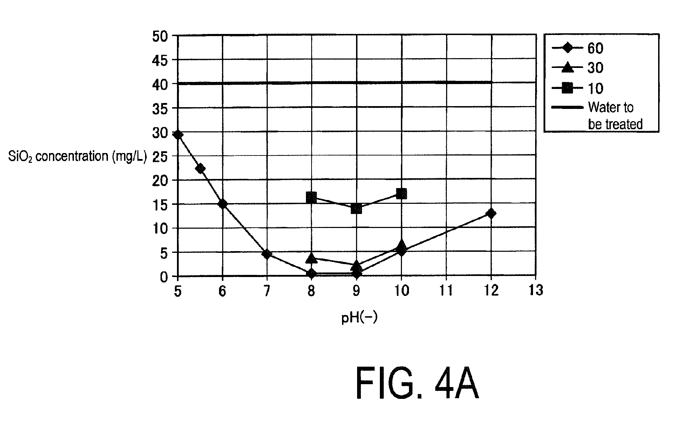

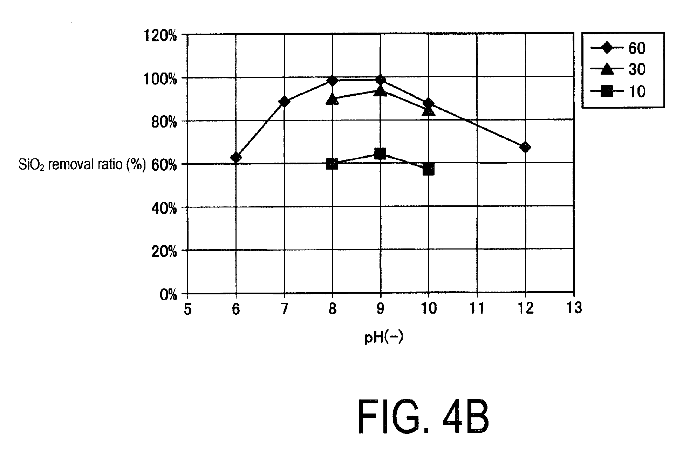

FIG. 4A is a diagram illustrating the relationship between the pH of the water to be treated W1 after adding aluminum ion and the concentration of SiO₂. FIG. 4B is a diagram illustrating the relationship between the pH of the water to be treated W1 after adding aluminum ion and the removal ratio of SiO₂. Note that, in the examples shown in FIG. 4A and FIG. 4B, the concentration of SiO₂ in the water to be treated at a temperature of 25°C is set to 40 mg/L, and examples having an aluminum concentration of 10 mg/L, 30 mg/L, or 60 mg/L are shown. As shown in FIG. 4A and FIG. 4B, it was found that, when the aluminum concentration of the water to be treated is 30 mg/L, the concentration of SiO₂ in the water to be treated W1 significantly decreases and the removal ratio of the SiO₂ significantly increases compared to the case where the aluminum concentration of the water to be treated W1 is 10 mg/L. It was also found that the similar SiO₂ concentrations and removal ratios are achieved for the case where the aluminum concentration of the water to be treated W1 is 30 mg/L and for the case where the aluminum concentration of the water to be treated W1 is 60 mg/L. From the result, when the aluminum concentration of the water to be treated W1 is 10 mg/L or higher, the removal effect of soluble silica can be achieved. From the perspectives of the removal efficiency of soluble silica and reduction in the used amount of the aluminate ion additive that is added as necessary, the aluminum concentration of the water to be treated W1 is preferably 20 mg/L or higher, and more preferably 30 mg/L or higher.

Furthermore, when the pH of the water to be treated W1 after the addition of aluminum ion is lower than 5.5, the concentration of SiO₂ tends to increase. On the other hand, when the pH is 5.5 or higher, the concentration of SiO₂ rapidly decreases to 25 mg/L or lower, and the removal ratio of SiO₂ rapidly increases. Furthermore, at a pH exceeding pH 9, it was found that the concentration of SiO₂ increases again, and the removal ratio of SiO₂ tends to decrease. It is thought that this result is caused by formation of a compound formed from Al(OH)₄⁻ and soluble silica (SiO₂) in the pH of 5.5 or higher because the aluminate ion is present as Al³⁺ at a pH of 5.5 or lower, and is present as Al(OH)₄⁻ at a pH of 5.5 or higher. Taking these results into account, from the perspective of efficiently reducing the concentration of soluble silica in the water to be treated W1, the pH of the water to be treated W1 is preferably 5.5 or higher, more preferably 6 or higher, even more preferably 7 or higher, and yet even more preferably 8 or higher, but preferably 13 or lower, more preferably 12 or lower, even more preferably 11 or lower, and yet even more preferably 10.5 or lower. Taking these into account, the range of pH is preferably 5.5 or higher but 12 or lower, more preferably 7 or higher but 11 or lower, and even more preferably 8 or higher but 10 or lower.

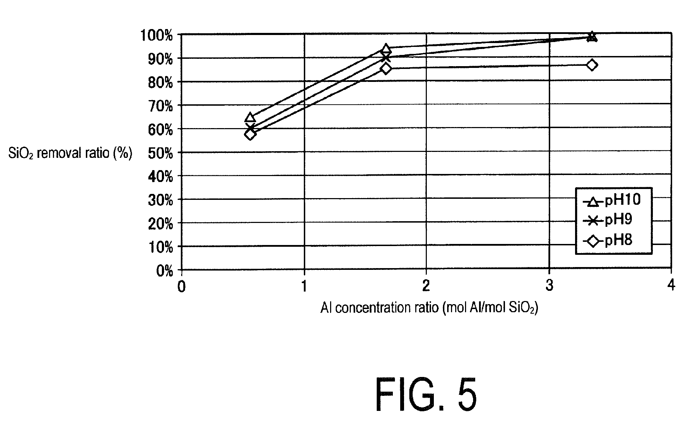

FIG. 5 is a diagram illustrating the relationship between the concentration ratio of aluminum (mol Al/mol SiO₂) and the removal ratio of SiO₂ in the water treatment device 1 of this embodiment. Note that, in the examples shown in FIG. 5, cases where the pH of the water to be treated is set at 8, 9, and 10 are shown. As shown in FIG. 5, with the water treatment device 1 according to this embodiment, although the removal ratio of SiO₂ is approximately 60% when the concentration ratio of the aluminum is approximately 0.6 (mol Al/mol SiO₂), once the addition ratio of aluminum becomes 1.0 or higher, the removal ratio of SiO₂ significantly enhances, and the removal ratio becomes 90% when the addition ratio of the aluminum is 1.7 (mol Al/mol SiO₂). Furthermore, it was found that high removal ratio of SiO₂ is maintained even when the addition ratio of aluminum is further increased.

In the water treatment device 1 according to this embodiment, from the perspectives of the removal ratio of soluble silica and reducing the used amount of the aluminate ion additive, the aluminate ion concentration ratio in the water to be treated, in terms of the concentration ratio of the aluminum ion to the soluble silica (mol Al/mol SiO₂), is preferably 0.5 or greater, more preferably 1.0 or greater, even more preferably 1.5 or greater, but preferably 5.0 or less, more preferably 4.0 or less, and even more preferably 3.0 or less.

In the solid-liquid separating section 14, treated water W2 and deposit 15 are obtained by solid-liquid separating the compound of the aluminate ion and the soluble silica that is deposited in the soluble silica deposition section 13 from the water to be treated W1. The solid-liquid separating section 14 is not particularly limited as long as the solid-liquid separating section 14 can perform solid-liquid separation of the solid deposited in water to be treated W1 (deposit 15) and the water to be treated W1. Examples of the solid-liquid separating section 14 include a clarifier, hydrocyclone, sand filtration, and membrane separation apparatus, and the like. Examples of the deposit 15 include silica compounds, aluminum compounds, and magnesium compounds, such as Mg₅Al[AlSi₃O₁₀(OH₂)](OH)₆ and NaAlSi₃O₈, that are originated from silica, aluminum, and magnesium contained in the water to be treated.

In this embodiment, a hydrocyclone is preferably used as the solid-liquid separating section 14. Because of this, it is possible to separate the deposit based on the particle sizes, and thus deposit having a suitable particle size can be used as the seed material 16a that is added in a seed material adding section 16 that is described below, thereby making it possible to efficiently deposit the soluble silica component.

In the solid-liquid separating section 14, a flocculant may be used to promote the solid-liquid separation. Examples of the flocculant include iron-based flocculants, polymer flocculants, and the like. Among these, from the perspective of efficiently removing aluminate ions, an iron-based flocculant (FeCl₃, or the like) is preferably used.

In this embodiment, the seed material adding section 16 adds a Si-Al compound that is the deposit separated in the solid-liquid separating apparatus 14, such as Mg₅Al[AlSi₃O₁₀(OH₂)](OH)₆ and NaAlSi₃O₈, as a seed material for the deposition of the soluble silica from the water to be treated W1. By this addition of the seed material, the deposition rate of the soluble silica component from the water to be treated W1 can be increased. Therefore, it is possible to deposit the soluble silica component rapidly from the water to be treated W1, and the throughput of the water to be treated W1 is enhanced. Note that, in the present embodiment, although the example where the seed material 16a is added to the soluble silica deposition section 13 is described, the seed material 16a is added not necessarily to the soluble silica deposition section 13 as long as the seed material 16a is added at an upstream side of the soluble silica deposition section 13.

The magnesium ion adding section 17 adds a magnesium ion additive 17a to the water to be treated W1 to adjust the magnesium ion concentration in the water to be treated W1 to be within a predetermined range. Since the magnesium ion concentration in the water to be treated W1 can be adjusted to a suitable range by this, a Mg-Al-Si compound, such as Mg₅Al[AlSi₃O₁₀(OH₂)](OH)₆, is efficiently formed in the deposition in the soluble silica deposition section 13, and thus the concentration of the soluble silica in the treated water W2 can be further reduced. Furthermore, the aluminum ion concentration remained in the treated water W2 can be also reduced. Note that the added amount of the magnesium ion additive 17a is controlled via a valve V3 by the controlling device 21.

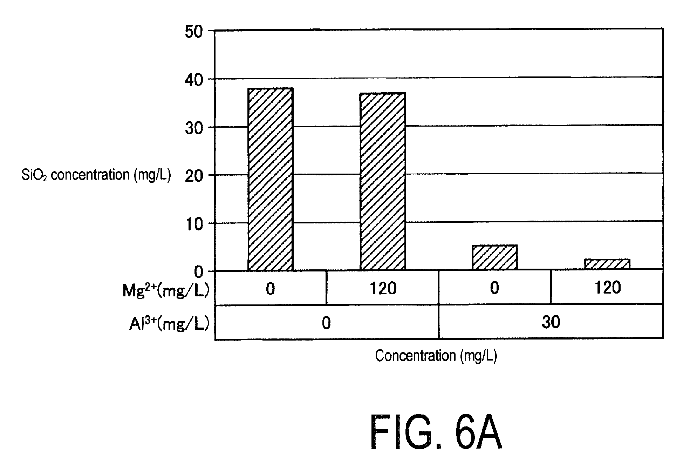

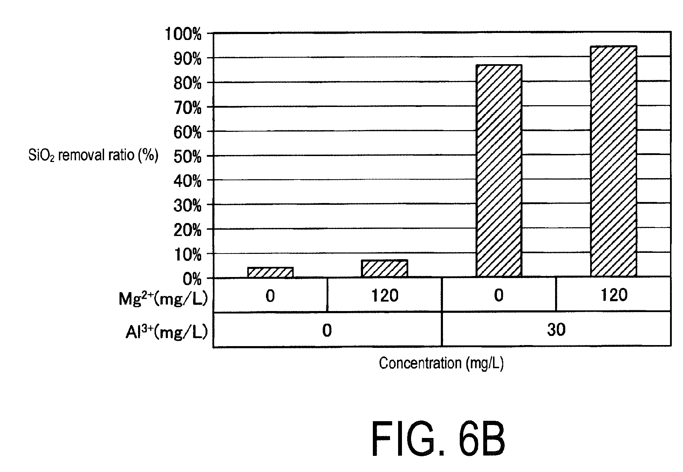

FIG. 6A is a diagram illustrating the relationship for the SiO₂ concentration in the water to be treated after adding magnesium ions. FIG. 6B is a diagram illustrating the relationship for the SiO₂ removal ratio in the water to be treated after adding aluminum ions. Note that, in the examples shown in FIG. 6A and FIG. 6B, the concentration and the removal ratio of the soluble silica for cases where aluminum ions and/or magnesium ions are added to the water to be treated W1 having a pH of 9 and having a concentration of the soluble silica of 40 mg/L at a temperature of 25°C are shown.

As shown in FIG. 6A and FIG. 6B, under conditions where the aluminum ion concentration is 0 mg/L, both the case where the magnesium concentration is 0 mg/L and the case where the magnesium concentration is 120 mg/L do not show significant differences in soluble silica concentrations and removal ratios. On the other hand, under conditions where the aluminum ion concentration is 30 mg/L, although the case where the magnesium concentration is 0 mg/L significantly reduces the soluble silica concentration, by making the magnesium concentration to be 120 mg/L, the soluble silica concentration further decreases while the removal ratio increases. It is conceived that this result is due to the synergistic effect that promotes deposition of the soluble silica caused by the formation of the Mg-Al-Si compound described above as a result of coexistence of the aluminum ion and the magnesium ion.

Examples of the magnesium ion additive 17a include various magnesium salts such as magnesium oxide, magnesium hydroxide, magnesium alkoxide, magnesium acetate, magnesium carbonate, magnesium chloride, and magnesium sulfate. Among these, from the perspective of efficiently depositing soluble silica, an aqueous solution of magnesium sulfate is preferably used.

When the magnesium ion concentration of the water to be treated W1 is 60 mg/L or higher, the removal effect of soluble silica can be achieved. From the perspectives of the removal efficiency of soluble silica and reduction in the used amount of the aluminate ion additive that is added as necessary, it was found that the magnesium ion concentration of the water to be treated W1 is preferably 90 mg/L or higher, and more preferably 120 mg/L or higher.

As the content of the magnesium ion in the water to be treated W1, from the perspective of efficiently depositing soluble silica, the magnesium concentration relative to the soluble silica (Mg/SiO₂) is preferably greater than 0, more preferably 1.5 or greater, and even more preferably 3 or greater, but preferably 10 or less, more preferably 7 or less, and even more preferably 5 or less.

The electrolysis section 18 electrolyzes water to form electrolyzed water W4. The electrolysis section 18 comprises an anode 18a composed of aluminum, a cathode 18b composed of titanium or aluminum, and a direct current power supply 18c provided in between the anode 18a and the cathode 18b. In this electrolysis section 18, aluminum ion (Al³⁺) is generated at the anode 18a based on the reaction formula (2) below, and hydroxide ion (OH⁻) is generated at the cathode 18b based on the reaction formula (3) below. Because of this, since aluminate ion-containing water is generated as a result of the reaction between the aluminate ion and the hydroxide ion as expressed in the reaction formula (4) below in this electrolysis section 18, the electrolysis section 18 is the supply source of the aluminate ion. By supplying this aluminate ion-containing water to the aluminate ion adding section 12 as the aluminate ion additive 12a, the aluminate ion additive can be supplied without using another aluminate ion additive. As the water to be electrolyzed by the electrolysis section 18, for example, water to be treated W1, treated water W2, condensed water W3, and the like can be used. Note that the electrolysis section 18 is not necessarily required.

Al → Al³⁺ + 3e⁻ Formula (2)

2H₂O + 2e⁻ → H₂ + 2OH⁻ Formula (3)

Al³⁺ + 40H⁻ → [Al(OH)₄]⁻ Formula (4)

Note that, in the electrolysis section 18, each of the anode 18a and the cathode 18b may be an aluminum electrode. Due to this, it is possible to generate an aluminum ion from each of the anode 18a and the cathode 18b by reversing the polarity by switching the positive electrode and the negative electrode of the direct current power supply 18c.

The reverse osmosis membrane filtration section 30 is a reverse osmosis membrane apparatus (RO) comprising a reverse osmosis membrane 30a. The reverse osmosis membrane filtration section 30 subjects the water to be treated W1, in which the soluble silica has been removed, to permeation through the reverse osmosis membrane 30a and supplies the water to be treated W1 as treated water W2, while the reverse osmosis membrane filtration section 30 discharges condensed water W3.

Note that, in the water treatment device 1, a purifying apparatus for water to be treated other than the reverse osmosis membrane filtration section 30 can be used as long as the purifying apparatus for water to be treated can purify the water to be treated W1.

As the purifying apparatus for water to be treated, for example, nano-filtration membrane (NF), electrodialyzer (ED), electrodialysis reversal (EDR) equipment, electric deionizer (EDI), capacitive deionizer (CDI), evaporator, deposition apparatus, ion exchange resin, or the like can be used.

The controlling device 21 is achieved by using a general purpose or dedicated purpose computer such as a central processing unit (CPU), read only memory (ROM), and random access memory (RAM), and a program that operates on the computer. The controlling device 21 controls the pH of the water to be treated W1 by changing the added amount of the pH adjusting agent 11a relative to the amount of the water to be treated W1 by adjusting the opening of a valve V1 depending on the pH of the water to be treated W1 measured by a pH meter 22. Furthermore, the controlling device 21 controls the aluminum ion concentration in the water to be treated W1 by changing the added amount of the aluminate ion additive 12a relative to the amount of the water to be treated W1 by adjusting the opening of a valve V2 based on the aluminum concentration in the water to be treated W1 measured by an aluminum concentration meter 31. Furthermore, the controlling device 21 controls the magnesium ion concentration in the water to be treated W1 by changing the added amount of the magnesium ion additive 17a relative to the amount of the water to be treated W1 by adjusting the opening of a valve V3 based on the aluminum concentration in the water to be treated W1 measured by an aluminum concentration meter 31. Furthermore, the controlling device 21 controls the added amount of the flocculant in the soluble silica deposition section 13 based on the aluminum concentration in the water to be treated W1 measured by an aluminum concentration meter 31.

Next, the overall operation of the water treatment device 1 according to this embodiment will be described. The water to be treated W1 (e.g. at pH 6.5) containing soluble silica such as cooling water of a plant device, as necessary, is adjusted to have a predetermined range of magnesium ion concentration by adding the magnesium ion additive 17a from the magnesium ion adding section 17, and then, as necessary, the pH of the water to be treated W1 is controlled to be within a predetermined range (e.g. pH 8 or higher but 10 or lower) by adding the pH adjusting agent 11 a from the pH adjusting agent adding section 11. Thereafter, as necessary, the aluminate ion additive 12a is added from the aluminate ion adding section 12 to the water to be treated W1 in the soluble silica deposition section 13. Because of this, since the aluminate ion concentration and the pH of the water to be treated W1 are adjusted to be within predetermined ranges, the soluble silica is deposited in the soluble silica deposition section 13. Here, the controlling device 21 controls the opening of the valves V1 and V3 to adjust the pH of the water to be treated W1 that is being introduced to the solid-liquid separating section 14 to be within a predetermined range (e.g. pH 8 or higher but 10 or less), and to adjust the magnesium ion concentration to be within a predetermined range.

Thereafter, after being introduced to the solid-liquid separating section 14 to remove the deposit 15 by a membrane filtration apparatus or the like, the water to be treated W1 is filtered through the reverse osmosis membrane filtration section 30 to separate the water to be treated W1 to the treated water W2 and the condensed water W3. At this point, the controlling device 21 controls the added amount of the aluminate ions by adjusting the opening of the valve V2, so that the aluminum ion concentration in the water to be treated W1 measured by an Al concentration meter 31 is adjusted to be within a predetermined range.

As described above, according to the water treatment device 1 of this embodiment, since the aluminate ion additive 12a is added to the water to be treated W1 containing the soluble silica, the soluble silica in the water to be treated is deposited without flocculating in the water to be treated W1. Because of this, the water treatment device 1 that can efficiently remove the soluble silica in the water to be treated W1 can be achieved since it is made possible to efficiently reduce the soluble silica concentration in the water to be treated compared to the case where the soluble silica is removed by adding a flocculant to the water to be treated. Furthermore, since the aluminate ion additive 12a is added based on the aluminum ion concentration in the water to be treated W1 measured by the A1 concentration meter 31 that is provided at the inlet of the reverse osmosis membrane filtration section 30, the effects of aluminum ions on the reverse osmosis membrane 30a of the reverse osmosis membrane filtration apparatus 30 can be avoided, and the deterioration of the reverse osmosis membrane 30a can be also avoided.

Note that, in this embodiment, although the example where the pH of the water to be treated W1 is adjusted to be within a predetermined range via the pH adjusting agent adding section 11 is described, for cases where the water to be treated W1 having a pH within a predetermined range in advance is used, the pH adjusting agent adding section 11 is not necessarily required. Furthermore, in this embodiment, although the example where the aluminate ion concentration of the water to be treated W1 is adjusted to be within a predetermined range via the aluminate ion adding section 12 is described, for cases where the water to be treated W1 having an aluminate ion concentration within a predetermined range in advance is used, the aluminate ion adding section 12 is not necessarily required.

For cases where the water to be treated is treated using a reverse osmosis membrane filtration apparatus, clogging of the reverse osmosis membrane may be caused due to the scale of aluminum caused by deposition of aluminum hydroxide (Al(OH)₃) due to the aluminum ions. In this case, scale deposition and clogging may be readily caused by local condensation at a treating part of the reverse osmosis filtration membrane due to the decrease in the amount of the water to be treated by the reverse osmosis membrane filtration apparatus as well as the increase in the supplying pressure of the water to be treated.

In the water treatment device comprising a reverse osmosis membrane filtration apparatus, a chlorine, hypochlorite ion of hypochlorous acid (NaClO) or the like could remain, or chlorine of hypochlorous acid or the like could be added to control the microbial concentration via sterilization or the like. Such chlorine is typically removed by reduction treatment using a reducing agent or by adsorption using activated carbon; however, when the chlorine, hypochlorite ion is not sufficiently treated and when the chlorine, hypochlorite ion remained in the water to be treated that is introduced to the reverse osmosis membrane, electrical destruction of the reverse osmosis membrane due to the chlorine is caused, and decrease in the amount of reverse osmosis membrane permeated water and decrease in demineralization rate are caused. Here, if a metal, such as an aluminum ion, is present, destruction of the membrane surface of the reverse osmosis membrane may be accelerated due to catalytic effect of the metal.

Furthermore, in the reverse osmosis membrane filtration apparatus, although a scale inhibitor is added at an upstream side of the reverse osmosis membrane filtration apparatus to prevent attachment of calcium-based scale (gypsum: CaSO₄; calcium carbonate: CaCO₃) to the reverse osmosis membrane, the effect of the scale inhibitor may be reduced if an aluminum ion is present in the water to be treated. Because of such a reason, typically in the water treatment device using a reverse osmosis membrane, aluminum-based chemicals (aluminum sulfate, polyaluminum chloride (PAC), sodium aluminate, and the like) are typically not used, and iron-based chemicals (iron chloride, FeCl₃, and the like) are typically used.

The present inventors have found that negative effects due to the aluminum ion in the water to be treated W1, in which the soluble silica has been removed, on the reverse osmosis membrane filtration apparatus can be reduced by providing an aluminum ion treating section that deposits aluminum in the water to be treated, in which the soluble silica has been removed, as a later step of the soluble silica deposition section 13 of the water treatment device 1 described above.

Second Embodiment

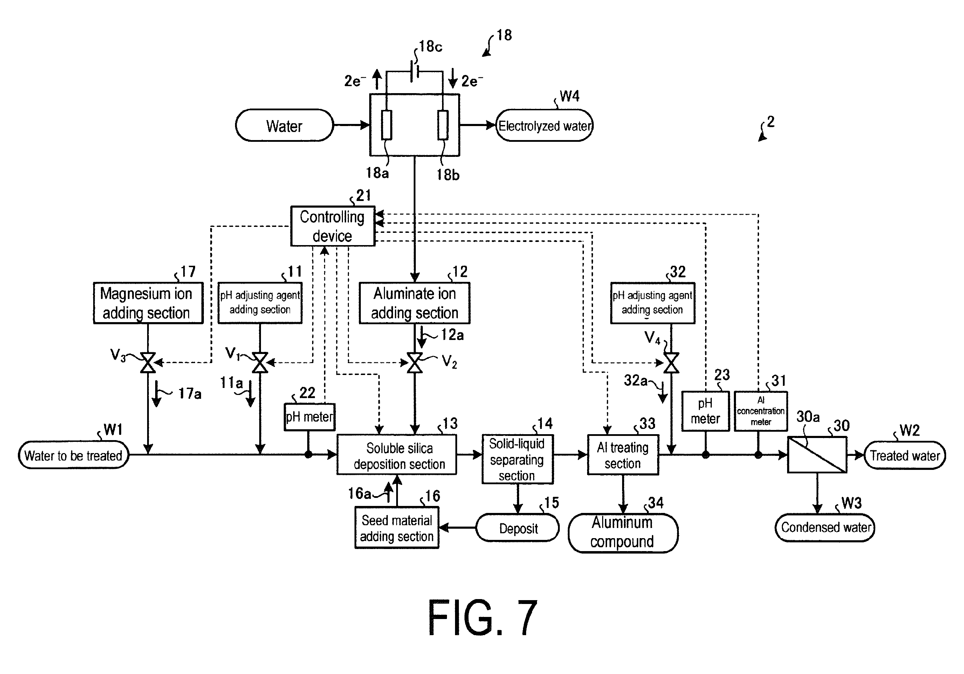

FIG. 7 is a schematic diagram of a water treatment device 2 according to the second embodiment of the present invention.

As illustrated in FIG. 7, the water treatment device 2 of this embodiment comprises: an Al treating section 33 that treats aluminum ions in the water to be treated W1, the Al treating section 33 being arranged after a solid-liquid separating apparatus 14; and a pH adjusting agent adding section 32 that adjust the pH of the water to be treated W1 by adding the pH adjusting agent 32a to the water to be treated W1, the pH adjusting agent adding section 32 being arranged after the Al treating section 33. For the other components, descriptions are omitted since the other components are the same as those of the water treatment device 1 illustrated in FIG. 1.

The Al treating section 33 deposits the aluminum ion in the water to be treated W1 as an aluminum compound 34 using a chelating resin, ion exchange resin, chelating agent, or the like. Since the aluminum ion concentration in the water to be treated W1 can be reduced by this, negative effects on the reverse osmosis membrane filtration section 30 that is arranged as a later step due to the aluminum ions can be reduced. As the ion exchange resin, for example, various anion exchange resins and various cation exchange resins can be suitably combined for use. As the anion exchange resin, a strong basic anion exchange resin may be used, or a weak basic anion exchange resin may be used. Furthermore, as the cation exchange resin, a strong acidic cation exchange resin may be used, or a weak acidic anion exchange resin may be used.

The Al treating section 33 reduces the aluminum ion concentration of the water to be treated W1, in which the soluble silica has been removed, by the first to fourth treatment methods described below. The first treatment method is a precipitation method by which pH of the water to be treated W1, in which the soluble silica has been removed, is adjusted to a predetermined range to reduce the saturation solubility of the aluminum ion, thereby insolubilizing the aluminum ion in the water to be treated W1 to remove the aluminum ion via solid-liquid separation.

The second treatment method is a chelating resin method by which the water to be treated W1 is passed through a chelating resin column, in which a chelating resin is packed in a cylindrical member, so that heavy metals such as aluminum is adsorbed on the chelating resin, thereby removing the aluminum ion.

The third treatment method is a liquid chelating method by which a liquid chelating agent such as a flocculant is added to the water to be treated W1, so that heavy metals such as aluminum are deposited as insoluble chelate complexes in the water to be treated W1, and then solid-liquid separation is performed to remove the aluminum ion.

The fourth treatment method is a cold lime method by which, as described in formulas (5) to (7) below, slaked lime (Ca(OH)₂) is added to the water to be treated W1 to increase the pH of the water to be treated W1, and by supplying calcium ions and hydroxide ions, calcium carbonate (CaCO₃) is deposited by a bicarbonate ion (HCO₃-) contained in the water to be treated and magnesium hydroxide (Mg(OH)₂) is deposited by a magnesium ion (Mg²⁺), to perform solid-liquid separation. In this cold lime method, a part of aluminum ion is coprecipitated and removed.

Ca(HCO₃)₂ + Ca(OH)₂ → 2CaCO₃↓ + 2H₂O Formula (5)

Mg(HCO₃)₂ + 2Ca(OH)₂ ⇒ Mg(OH)₂↓ + 2CaCO₃↓ + 2H₂O Formula (6)

CaCl₂ + Na₂CO₃ ⇒ 2NaCl + CaCO₃↓ Formula (7)

Note that, when performing the first, third, or fourth treatment method, the Al treating section 33 preferably has another solid-liquid separating apparatus that is separate from the solid-liquid separating section 14 that is provided as a later step. By providing the solid-liquid separating apparatus that is separate from the solid-liquid separating section 14, an aluminum compound 34 can be solid-liquid separated.

Furthermore, in the Al treating section 33, water treatment additives such as a scale inhibitor may be added to the water to be treated W1. Since the aluminum ion saturation solubility to the water to be treated W1 can be enhanced by this, negative effects on a reverse osmosis membrane 30a of the reverse osmosis membrane filtration section 30 that is arranged as a later step due to the aluminum ions can be reduced.

The pH adjusting device 32 adds a pH adjusting agent 32a to the water to be treated W1, in which the soluble silica has been removed, to decrease or increase the pH of the water to be treated W1, thereby enhancing the saturation solubility of aluminum ion to the water to be treated W1. Examples of the pH adjusting agent 32a include various acids such as hydrochloric acid, sulfuric acid, and citric acid, and various bases such as sodium hydroxide and calcium hydroxide. The controlling device 21 adjusts the opening of a valve V4 based on the measured value by a pH meter 23 that is provided as a later step after the solid-liquid separating section 14 to adjust the added amount of the pH adjusting agent 32a. Since the aluminum ion saturation solubility to the water to be treated W1 can be enhanced by this, negative effects on the reverse osmosis membrane filtration section 30 that is arranged as a later step due to the aluminum ions can be reduced.

When the saturation solubility of aluminum is increased by adding an alkali to the water to be treated W1, the pH adjusting device 32 preferably increases the pH of the water to be treated W1 by more than 0, more preferably increases the pH by 0.1 or more, even more preferably increases the pH by 0.3 or more, and yet even more preferably increases the pH by 1.0 or more. Furthermore, when the saturation solubility of aluminum is increased by adding an acid to the water to be treated W1, the pH adjusting device 32 can increase the saturation solubility of aluminum by, for example, if the pH of the water to be treated W1 is 9, adjusting the pH of the water to be treated W1 to be 4.2 or lower. For example, when the aluminum concentration in the water to be treated W1 is approximately 0.01 mg/L, the pH adjusting device 32 can avoid the deposition of aluminum by adjusting the pH of the water to be treated W1 to be 5.0 or lower, or 6.0 or higher.

For example, when the pH of the wastewater from the solid-liquid separating section 14 is 9, the pH adjusting device 32 can deposit the excessive aluminum from the water to be treated W1 by adjusting the pH to be within a range of 4.5 to 9. Since the solubility of aluminum ion is minimum at pH 5.5, the excessive aluminum is deposited from the water to be treated W1 as an aluminum compound 34 by adjusting the pH to be pH 4.5 or higher but 9 or lower by adjusting the added amount of the pH adjusting agent 32a. Also, the deposited aluminum compound 34 can be removed together with the deposit 15 in the solid-liquid separating section 14. In this case, from the perspective of adjusting the aluminum concentration of the water to be treated W1 that is introduced to the reverse osmosis membrane filtration section 30 to be 0.05 mg/L or lower, the pH of the water to be treated W1 is more preferably within a range of pH 4.8 to 7.0. From the perspective of adjusting the aluminum concentration of the water to be treated W1 that is introduced to the reverse osmosis membrane filtration section 30 to be 0.01 mg/L or lower, the pH of the water to be treated W1 is even more preferably within a range of pH 5.0 to 6.0.

Next, the overall operation of the water treatment device 2 according to this embodiment will be described. First, the deposit 15 is removed from the water to be treated W1 in the same manner as for the water treatment device 1 described above. Thereafter, from the water to be treated W1 in which the deposit 15 is separated, aluminum ion is removed by using a chelating resin, ion exchange resin, chelating agent, or the like in the Al treating section 33. At this point, the Al treating section 33 may increase the solubility of the aluminum ion by adding a scale inhibitor. After the pH adjusting agent 32a is added to the water to be treated W1 in the pH adjusting agent adding section 32, so that the pH is adjusted to be within a predetermined range, the water to be treated W1 is then separated to the treated water W2 and the condensed water W3 in the reverse osmosis membrane filtration section 30. At this point, the controlling device 21 controls the added amount of the chelating agent or the like, treatment of the ion exchange resin, or the like, so that the aluminum ion concentration in the water to be treated W1 measured by an Al concentration meter 31 is adjusted to be within a predetermined range (e.g. 0.01 mg/L). Furthermore, the controlling device 21 may control the added amount of the aluminate ions added to the deposition vessel 13 to lower the aluminum ion concentration that is introduced to the reverse osmosis membrane filtration section 30.

As described above, according to this embodiment, since aluminum ions in the water to be treated W1 are reduced by the Al treating section 33 that is provided as a later step after the solid-liquid separating section 14, the aluminum ion concentration of the water to be treated W1 that is introduced to the reverse osmosis membrane filtration section 30 can be further lowered compared to the water treatment device 1 described above. By this, effects of the aluminum ions on the reverse osmosis membrane 30a of the reverse osmosis membrane filtration section 30 can be further reduced.

### Third Embodiment

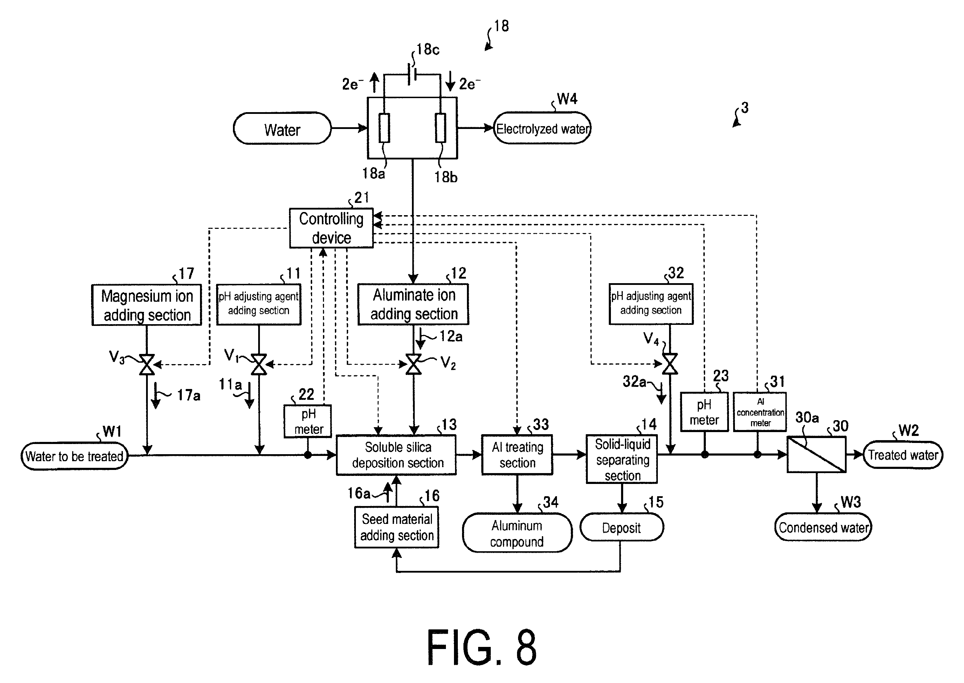

FIG. 8 is a schematic diagram of a water treatment device 3 according to the third embodiment of the present invention.

As illustrated in FIG. 8, the water treatment device 3 of this embodiment comprises the Al treating section 33 of the water treatment device 2 described above provided in between the soluble silica deposition section 13 and the solid-liquid separating section 14. For the other components, descriptions are omitted since the other components are the same as those of the water treatment device 2 described above.

As described above, according to this embodiment, since aluminum is deposited in the Al treating section 33 and the aluminum ion is then removed together with the deposit 15 by the solid-liquid separating section 14, the aluminum ion concentration of the water to be treated W1 that is introduced to the reverse osmosis membrane filtration section 30 can be further lowered compared to the water treatment device 1 described above. By this, effects of the aluminum ions on the reverse osmosis membrane 30a of the reverse osmosis membrane filtration section 30 can be further reduced.

Note that, in the second embodiment described above, the configuration in which the Al treating section 33 is arranged after the solid-liquid separating section 14 is described, and in the third embodiment described above, the configuration in which the Al treating section 33 is arranged prior to the solid-liquid separating section 14 is described; however, the Al treating sections 33 may be arranged prior to and after the solid-liquid separating section 14. By this, since the aluminum ion in the water to be treated W1, in which the soluble silica has been removed, can be further removed as the aluminum compound 34 after separating the deposit 15 in the solid-liquid separating section 14 following the reduction of the aluminum ion concentration in the water to be treated W1 by the Al treating section 33 that is provided prior to the solid-liquid separating section 14, the concentration of the aluminum ion supplied to the treated water purifying section 20 can be further reduced.

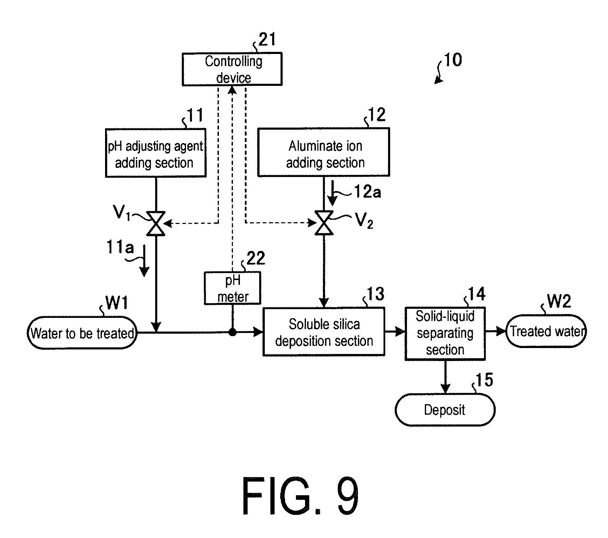

Hereinafter, Application Examples of the water treatment devices according to the embodiments described above will be described. Note that, hereinafter, examples in which a soluble silica removing section 10 illustrated in FIG. 9 is applied to various water treatment devices will be described. As illustrated in FIG. 9, this soluble silica removing section 10 comprises: a pH adjusting agent adding section 11 by which a pH adjusting agent 11 a is added to water to be treated W1; an aluminate ion adding section 12 by which an aluminate ion additive 12a is added to the water to be treated W1 in which the pH adjusting agent 11a has been added; a soluble silica deposition section 13 by which soluble silica is deposited from the water to be treated W1 in which the aluminate ions have been added; and a solid-liquid separating section 14 by which treated water W2 is obtained by solid-liquid separating the soluble silica that has been deposited.

### Application Example 1

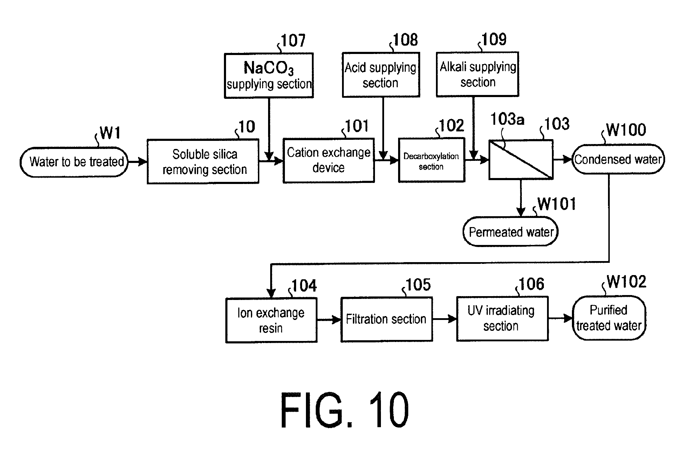

FIG. 10 is a schematic diagram of a water treatment device 100 of Application Example 1. As illustrated in FIG. 10, this water treatment device 100 is a pre-treatment device for supply water for a reverse osmosis plant for purifying high purity water for semiconductor production. The water treatment device 100 comprises: a soluble silica removing section 10 by which soluble silica in the water to be treated W1 is removed; a cation exchange device 101, as a purifying apparatus for the water to be treated, by which the treated water W2 is treated by a weak acidic cation exchange resin to remove bicarbonate and aluminum ion; a decarboxylation section 102 by which carbon dioxide gas is removed from the treated water W2 in which bicarbonate and aluminum ion have been removed; and a reverse osmosis membrane filtration section 103 by which permeated water W100 and condensed water W101 are obtained by subjecting the treated water W2, which has been decarboxylated, to the filtration using a reverse osmosis membrane 103a.

The permeated water W100 that has permeated through the reverse osmosis membrane filtration section 103 is further purified by an ion exchange resin 104 such as a cation exchange device or an anion exchange device, and after the permeated water W100 has undergone final filtration in a filtration section 105, the permeated water W100 is subjected to UV radiation in a UV irradiating section 106 to kill organisms and used as a purified treated water W102. In between the soluble silica removing section 10 and the cation exchange device 101, a Na₂CO₃ supplying section 107 that supplies Na₂CO₃ to the water to be treated W1 in which soluble silica has been removed is provided. In between the cation exchange device 101 and the decarboxylation section 102, an acid supplying section 108 that supplies an acid to the water to be treated W1 that has been purified by ion exchange is provided. In between the decarboxylation section 102 and the reverse osmosis membrane filtration section 103, an alkali supplying section 109 that supplies alkali to the water to be treated W1 that has been decarboxylated is provided. Note that, in this water treatment device 100, the arrangement of the soluble silica removing section 10 may be suitably modified as long as the soluble silica removing section 10 is arranged at an upstream side of the reverse osmosis membrane filtration section 103. As described above, in this embodiment, the treated water W2 that has been treated in the soluble silica removing section 10 may be used after being further purified by the cation exchange device 101 or the like.

### Application Example 2

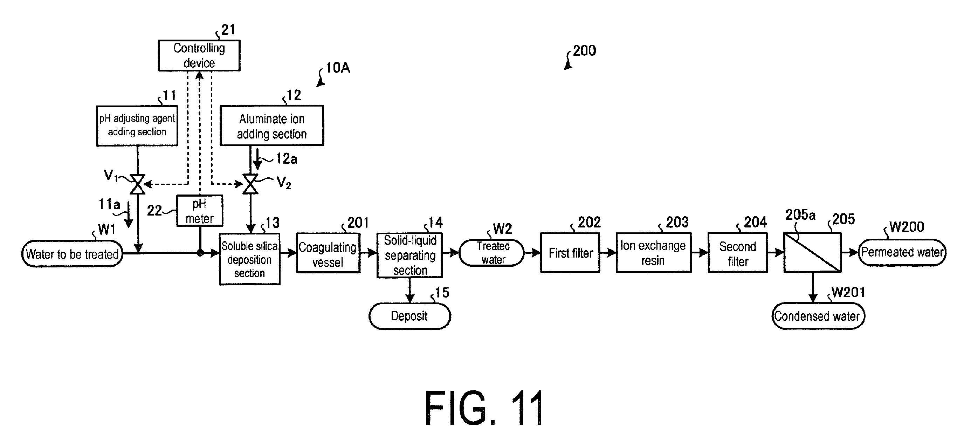

FIG. 11 is a schematic diagram of a water treatment device 200 of Application Example 2. As illustrated in FIG. 11, this water treatment device 200 is a treatment device for wastewater containing suspension and/or dissolved solids, such as a high concentration of organic substances and silica. In this water treatment device 200, a soluble silica removing section 10A comprises a flocculation vessel 201 that further flocculates the soluble silica in the water to be treated W1 after the soluble silica deposition section 13. In this flocculation vessel 201, the soluble silica in the water to be treated W1, in which aluminate ion has been added from the aluminate ion adding section 12, is deposited together with the flocculant, such as iron chloride, in the water to be treated W1. After the treated water W2 and the deposit 15 are obtained by separating the soluble silica deposited in the solid-liquid separating section 14, the treated water W2 is filtered using a first filter 202 composed of a multi media filter. Thereafter, aluminum ion contained in the treated water W2 is removed by an ion exchange resin 203, as a purifying section of the water to be treated. After the treated water W2 is filtered using a second filter 204 composed of a cartridge filter, the permeated water W200 and the condensed water W201 are separated in a reverse osmosis membrane filtration section 205 having a reverse osmosis membrane 205a. As described above, in this embodiment, the treated water W2 that has been treated in the soluble silica removing section 10 may be used after being further purified by the ion exchange resin 203 or the like.

### Application Example 3

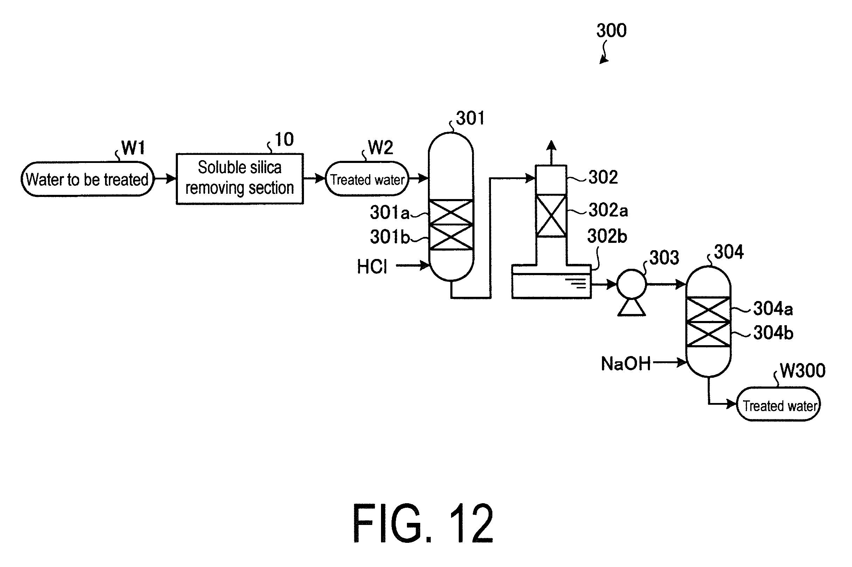

FIG. 12 is a schematic diagram of a water treatment device 300 of Application Example 3. As illustrated in FIG. 12, this water treatment device 300 comprises a first demineralizer 301, as a purifying section of the water to be treated, that is provided after the soluble silica removing section 10; a degassing column 302 that is provided after the demineralizer; and a second demineralizer 304 that is provided after the degassing column 302. After the treated water W2 that is introduced to the first demineralizer 301 undergoes ion exchange via a first ion exchange resin 301a and a second ion exchange resin 301b, hydrochloric acid is supplied to the column bottom, and then the treated water W2 is supplied to the degassing column 302. The treated water W2 that is supplied to the degassing column 302 is washed in a washing section 302a and then collected in a column bottom 302b. The treated water W2 that is collected in the column bottom 302b of the degassing column 302 is introduced to the second demineralizer 304 via a pump 303, and then subjected to ion exchange via a first ion exchange resin 304a and a second ion exchange resin 304b. Thereafter, the pH of the treated water W2 is adjusted to a predetermined pH by being supplied with sodium hydroxide aqueous solution in the column bottom to become the treated water W300. By performing these treatments, it is possible to lower the consumption rate of the ion exchange resin. Note that the arrangement of the soluble silica removing section 10 may be suitably modified as long as the soluble silica removing section 10 is arranged at an upstream side of the second ion exchange resin 304b of the second demineralizer 304. As described above, in this Application Example 3, the treated water W2 that has been treated in the soluble silica removing section 10 may be used after being further purified by the anion exchange resin or the like.

As the first ion exchange resins 301a and 304a and the second ion exchange resins 301b and 304b of the first demineralizer 301 and the second demineralizer 304, various anion exchange resins and cation exchange resins can be suitably combined for use. In this Application Example 3, as the first ion exchange resin 301a and the second ion exchange resin 301b of the first demineralizer 301, strong acidic cation exchange resins are preferably used, and as the first ion exchange resin 304a and the second ion exchange resin 304b of the second demineralizer 304, strong basic anion exchange resins are preferably used.

Note that, the configuration of the water treatment device 300 comprising the first demineralizer 301, the degassing column 302, and the third demineralizer 304 in Application Example 3 described above can be suitably modified. In the water treatment device 300, the configuration in which the degassing column 302 and the third demineralizer 304 are omitted can be employed. In this case, the first demineralizer 301 preferably comprises a strong acidic cation exchange resin as the first ion exchange resin 301 a, and a strong basic anion exchange resin as the second cation exchange resin 301 b. By employing such a configuration, the treated water W300 can be efficiently obtained when the ion concentration in the water to be treated W1 is low. Also in this case, by removing the soluble silica in the water to be treated W1 by the soluble silica removing section 10, the amount of chemicals that is necessary to regenerate the strong basic anion exchange resin and the used amount of the strong basic anion exchange resin can be lowered.

Furthermore, in the water treatment device 300, a third demineralizer that further polishes the treated water W300 after the second demineralizer 304 may be provided. In this case, the third demineralizer preferably comprises a strong acidic cation exchange resin as a first ion exchange resin, and a strong basic anion exchange resin as a second cation exchange resin. By employing such a configuration, the purity of the treated water W300 can be further enhanced. Also in this case, by removing the soluble silica in the water to be treated W1 by the soluble silica removing section 10, the amount of chemicals that is necessary to regenerate the strong basic anion exchange resins of the first ion exchange resins 301a and 304a and the second ion exchange resins 301b and 304b of the first demineralizer 301 and the second demineralizer 304 as well as the strong basic anion exchange resin of the third demineralizer, and the used amount of the strong basic anion exchange resins can be lowered.

### Application Example 4

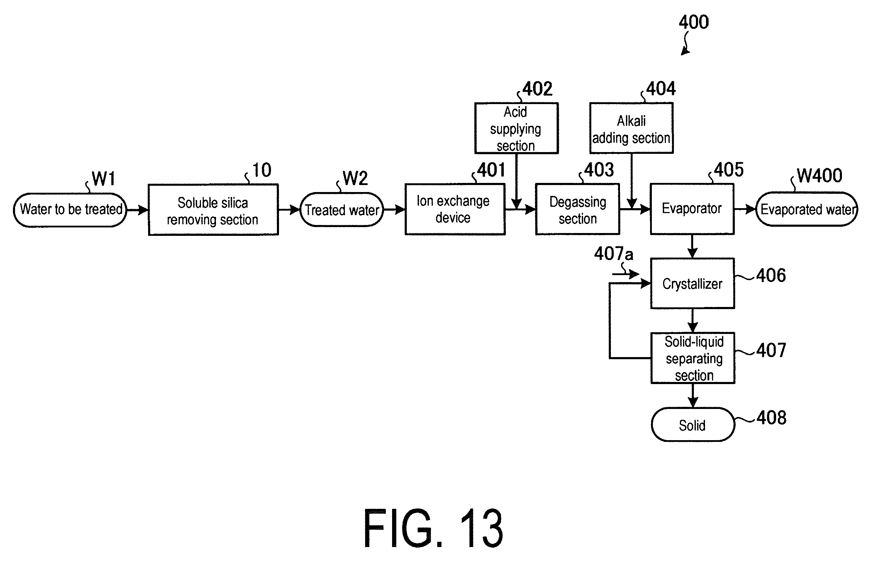

FIG. 13 is a schematic diagram of a water treatment device 400 of Application Example 4. As illustrated in FIG. 13, this water treatment device 400 is a water treatment device for suppressing scale that is attached during evaporation operation, by treating water containing organic substances and inorganic substances. This water treatment device 400 comprises: an ion exchange device 401 that is provided after the soluble silica removing section 10; an acid supplying section 402 that supplies an acid to the treated water W2 that has undergone ion exchange in the ion exchange device 401; a degassing section 403 that is provided after the ion exchange device 401; an alkali adding section 404 that adds alkali to the treated water W2 that has been degassed in the degassing section 403; and an evaporator 405, as the purifying section of the water to be treated, that is provided after the alkali adding section 404.

The ion exchange device 401 purifies the water to be treated W1, in which soluble silica has been removed, by ion exchange. The acid supplying section 402 adjusts the pH to be within the predetermined range by adding an acid to the water to be treated W1 that has been purified by ion exchange. The degassing section 403 removes carbon dioxide gas contained in the treated water W2. The alkali adding section 404 increases the pH of the treated water W2 by adding alkali to the treated water W2 in which carbon dioxide gas has been removed. The evaporator 405 provides evaporated water W400 by evaporating the basic treated water W2 and takes out the condensed water from the column bottom and supplies the condensed water to the crystallizer 406. In the crystallizer 406, the condensed water, which has been condensed by the evaporator 405 in a range that does not deposit crystals, is subjected to deposition, and the deposited solid 408 is separated in the solid-liquid separating section 407. The condensed liquid 407a that has been separated in the solid-liquid separating section 407 is supplied again to the crystallizer 406. As described above, in this embodiment, the treated water W2 that has been treated in the soluble silica removing section 10 may be used after being further purified by the ion exchange device 401, the evaporator 405, or the like. Also in this case, since the soluble silica in the water to be treated W1 is reduced in the soluble silica removing section 10, purification efficiencies of the water to be treated W1 in the ion exchange device 401 and the evaporator 405 are enhanced.

### Examples

Hereinafter, the present invention will be further described based on a working example and a comparative example performed to make the effects of the present invention clear. Note that the present invention is not limited by the working example and the comparative example described below.

### (Working Example)

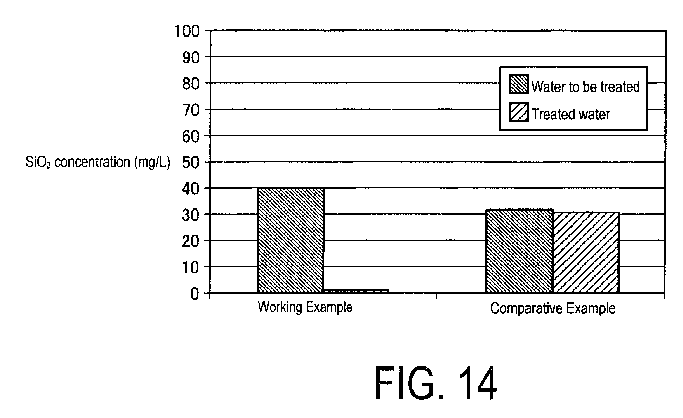

Purified treated water was produced by adding sodium aluminate to water to be treated and removing soluble silica using a water treating device illustrated in FIG. 1. The pH of the water to be treated was 10. The temperature was at 25°C. The soluble silica concentration in the water to be treated was 40 mg/L, the aluminate ion concentration was 157 mg/L, and the magnesium ion concentration was 120 mg/L. As a result, as shown in FIG. 14, the soluble silica in the water to be treated was deposited and the soluble silica concentration in the treated water was significantly reduced (water to be treated: 40 mg/L →treated water: 0.8 mg/L). Furthermore, as a result of conducting composition analysis of the deposit by X-ray fluorescence analysis, Mg, Al, and Si were coexisted in the deposit.

### Comparative Example

Water to be treated was treated in the same manner as in Working Example except for aluminum sulfate was used in place of sodium aluminate. As a result, as shown in FIG. 14, the soluble silica in the water to be treated was not deposited and the soluble silica concentration in the treated water was not reduced (water to be treated: 32 mg/L → treated water: 31 mg/L). It is thought that this result is because a compound of the aluminate ion and the soluble silica is not deposited in the water to be treated since the aluminate ion was not produced in the water to be treated, for cases where aluminum sulfate was used.

### Reference Signs List

1, 2, 3, 100, 200, 300, 400 Water treatment device
10 Soluble silica removing section
11 pH adjusting agent adding section
11a pH adjusting agent
12 Aluminate ion adding section
12a Aluminate ion additive
13 Soluble silica deposition section
14 Solid-liquid separating section
15 Deposit
16 Seed material adding section
16a Seed material
17 Magnesium ion adding section
17a Magnesium ion additive
18 Electrolysis section
18a Anode
18b Cathode
18c Direct current power supply
21 Controlling device
22 pH meter
30, 103, 205 Reverse osmosis membrane filtration section
30a, 103a, 205a Reverse osmosis membrane
31 Al concentration meter
32 pH adjusting agent adding section
32a pH adjusting agent
33 Al treating section
34 Aluminum
101 Cation exchange device
102 Decarboxylation section
201 Flocculation vessel
202 First filter
203 Ion exchange resin
204 Second filter
301 First demineralizer
301a, 304a First ion exchange resin
301b, 304b Second ion exchange resin
302 Decarboxylation column
302a Washing section
302b Column bottom
303 Pump
304 Second demineralizer
401 Ion exchange device
402 Acid supplying section
403 Degassing section
404 Alkali adding section
405 Evaporator
406 Crystallizer
407 Solid-liquid separating section
407a Condensed liquid
408 Solid

## Claims

1. A water treatment device comprising:
a soluble silica deposition section that deposits soluble silica dissolved in water to be treated, the water to be treated having a concentration of aluminate ion represented by general formula (1) below and a pH that are in predetermined ranges;
a solid-liquid separating section that separates the deposited soluble silica from the water to be treated to obtain water to be treated in which the soluble silica has been removed from the water to be treated; and
a reverse osmosis membrane filtration section that filtrates, by using a reverse osmosis membrane, the water to be treated in which the soluble silica has been removed in the solid-liquid separating section:
[Al(OH)₄]⁻ Formula (1).

2. The water treatment device according to claim 1, further comprising an aluminate ion adding section by which an aluminate ion additive is added to the water to be treated.

3. The water treatment device according to claim 2, wherein the aluminate ion additive is sodium aluminate.

4. The water treatment device according to any one of claims 1 to 3, further comprising a pH adjusting agent adding section by which the pH of the water to be treated is adjusted to a pH of 5.5 or higher by adding a pH adjusting agent to the water to be treated.

5. The water treatment device according to any one of claims 1 to 4, further comprising a seed material adding section by which soluble silica that is deposited in advance and that is contained in the water to be treated is added, as a seed material, to the water to be treated.

6. The water treatment device according to any one of claims 1 to 5, further comprising a magnesium ion adding section by which a magnesium ion additive is added to the water to be treated.

7. The water treatment device according to any one of claims 2 to 6, further comprising an electrolysis apparatus by which aluminate ion-containing water generated by electrolyzing a part of the water to be treated is added, as the aluminate ion additive, to the water to be treated.

8. The water treatment device according to any one of claims 1 to 7, further comprising an aluminum ion treating section by which aluminum ion contained in the treated water to be supplied to the reverse osmosis membrane filtration section is removed.

9. The water treatment device according to claim 8, wherein the aluminum ion is removed by an ion exchange resin provided in the aluminum ion treating section.

10. The water treatment device according to claim 8 or 9, wherein the aluminum ion is removed by adding a chelating agent to the water to be treated in the aluminum ion treating section.

11. The water treatment device according to any one of claims 8 to 10, further comprising:
an aluminum ion concentration measurement device that measures an aluminum ion concentration of the water to be treated that is introduced to the reverse osmosis membrane filtration section; and
a controlling device that controls at least one of: the aluminate ion concentration, pH of the water to be treated, an added amount of the chelating agent that is added to the aluminum ion treating section, and treatment of the ion exchange resin, based on the aluminum ion concentration that is measured by the aluminum ion concentration measurement device.

12. A water treatment method comprising:
a deposition step of depositing soluble silica dissolved in water to be treated, the water to be treated having a concentration of aluminate ion represented by general formula (1) below and a pH that are in predetermined ranges;
a solid-liquid separating step of solid-liquid separating the deposited soluble silica from the water to be treated to obtain water to be treated in which the soluble silica has been removed from the water to be treated; and
a filtration step of filtrating, by using a reverse osmosis membrane filtration section, the water to be treated in which the soluble silica has been removed by the solid-liquid separation:
[Al(OH)₄]⁻... Formula (1).

13. The water treatment method according to claim 12, wherein an aluminate ion additive is added to the water to be treated.

14. The water treatment method according to claim 13, wherein the aluminate ion additive is sodium aluminate.

15. The water treatment method according to any one of claims 12 to 14, wherein the pH of the water to be treated is adjusted to a pH of 5.5 or higher by adding a pH adjusting agent to the water to be treated.

16. The water treatment method according to any one of claims 12 to 15, wherein soluble silica that is deposited in advance and that is contained in the water to be treated is added, as a seed material, to the water to be treated.

17. The water treatment method according to any one of claims 12 to 16, wherein a magnesium ion additive is added to the water to be treated.

18. The water treatment method according to any one of claims 12 to 17, wherein aluminate ion-containing water generated by electrolyzing a part of the water to be treated is added, as the aluminate ion additive, to the water to be treated.

19. The water treatment method according to any one of claims 12 to 18, wherein the aluminum ion contained in the treated water to be supplied to the reverse osmosis membrane filtration section is removed by an aluminum ion treating section.

20. The water treatment method according to any one of claims 12 to 19, the method further comprising: measuring an aluminum ion concentration in the water to be treated that is introduced to the purifying section of the water to be treated, and controlling at least one of: the aluminate ion concentration, pH of the water to be treated, an added amount of a chelating agent that is added to the aluminum ion treating section, and treatment of the ion exchange resin, based on the measured aluminum ion concentration.
